Europäisches Patentamt

European Patent Office

Office européen des brevets

(19)

(11) Publication number: **0 023 131**
**B1**

(12)

# EUROPEAN PATENT SPECIFICATION

(45) Date of publication of patent specification: **05.10.83**

(51) Int. Cl.³: **H 04 N 5/33, H 04 N 3/28**

(21) Application number: **80302403.3**

(22) Date of filing: **17.07.80**

(54) Optical scanning devices.

(30) Priority: **20.07.79 GB 7925362**

(43) Date of publication of application:
**28.01.81 Bulletin 81/4**

(45) Publication of the grant of the patent:
**05.10.83 Bulletin 83/40**

(84) Designated Contracting States:
**DE FR NL SE**

(56) References cited:
**DE - A - 2 802 441**
**DE - B - 2 534 586**
**GB - A - 1 361 144**

(73) Proprietor: **THE RANK ORGANISATION LIMITED**
**11 Hill Street**
**London W1X 8AE (GB)**

(72) Inventor: **Stillwell, Peter Frederic T. C.**
**The Cedars Hillside Close**
**Crookham Village Aldershot, Hampshire (GB)**
Inventor: **Moore, William Thomas**
**11 Beaconsfield Road**
**Ealing, London W.5. (GB)**
Inventor: **Demaine, David George Anthony**
**35 The Avenue**
**Leeds LS8 IJG (GB)**

(74) Representative: **Cullis, Roger et al,**
**c/o H.G. Amann Patents Manager The Rank**
**Organisation Limited 439 Godstone Road**
**Whyteleafe, Surrey, CR3 OYG (GB)**

Courier Press, Leamington Spa, England

## Optical scanning device

The present invention relates to an optical scanning device for producing electrical picture-information signals representative of a scene under surveillance; in particular, but not exclusively, the invention relates to such a device adapted for producing images from light in the infra-red region of the spectrum.

When used in this specification the terms "optical" and "light" will be understood to relate to electro-magnetic radiation which extends beyond the visible spectrum and includes, inter alia, infra-red radiation.

Imaging devices incorporating optical scanners are known as such. These devices include a telescope directing incident light onto the facets of a polygonal reflector which is driven to rotate so that reflected light is scanned onto a plane reflector (perhaps after one or more further beam folding reflections at plane or curved reflectors) which is caused to oscillate about a given axis in order to change the elevation of the scanned beam orthogonally with respect to the scanning introduced by the rotating polygon. The light from the oscillating plane reflector is directed onto an array of photosensitive elements which produce electrical output signals representing the light incident thereon.

The displacement of the beam in the optical scanner introduced by the rotating polygonal reflector is termed the azimuth scan and the displacement within the optical scanner caused by the oscillating plane reflector is called the elevation scan. The azimuth scan rate is determined by the speed of rotation of the rotating polygonal reflector. (It should be noted that although prior art devices employ polygonal reflectors it would be possible alternatively to employ refractors and references hereinafter to "optical elements" will be understood to refer to refractors or reflectors.)

With a view to enhancing the resolution of such optical scanning devices, it has been generally proposed in UK patent specification No. 1,361,144 (Hughes) to arrange for each segment of a surveyed scene to fall successively on at least two detector elements of the detector array during scanning, the detector-element output signals representing the same segment of a surveyed scene to fall successively summed together. Specifically disclosed in UK 1,361,144 is a tapped delay line arrangement for summing the outputs of four detector elements arranged in a row in the azimuth or line scan direction.

German patent specification No. 2,534,586 (Pusch) discloses an alternative way of implementing the general concept of improving resolution by summing corresponding signal portions. In the system described in this specification, a column of detector elements is provided at right angles to the line scan direction, and the image of a surveyed scene is optically scanned across the column of elements in such a manner that successive scans overlap each other. During each scan the scan line signals from the detector elements are output in parallel and are used to produce corresponding image lines by means, for example, of an L.E.D. array geometrically identical to the detector array. The visual image lines produced by the L.E.D. array are then optically scanned across image storage means (such as the eye, or a vidicon tube) in such a manner that an image of the surveyed scene is constructed with image lines corresponding to the same line of the surveyed scene being superimposed in the image.

The system disclosed in the Pusch specification thus effects improvement in image resolution by using overlapping scan bands with the summation of corresponding scan lines in successive scans. A drawback of the Pusch system is that the summation technique employed requires the spatial reconstruction of the image of a surveyed scene.

German patent specification 2,802,441 (Thomson — C. S. F.) discloses a thermal imaging system in which a pyroelectric imaging tube is panned across a scene under surveillance transversely to the line scan direction within the tube itself. During one complete panning of the imaging tube, a number of frame scans are carried out within the tube, the frame scan repetition frequency and the panning speeds being such that successive frame scans overlap each other. During each frame scan a predetermined number of line scan signals are produced, the scan line signals being output from the imaging tube in serial fashion. The scan line signals from each frame scan are summed with the corresponding line signals of the overlapping portion of the previous scan frame. Three basic summing arrangements are disclosed, namely a CCD delay line, a scanned storage tube, and a digital store arrangement. All of these summing arrangements rely on the serial input of scan line signals. Thus, although the Thomson-C.S.F. specification, like the Pusch specification referred to above, operates on the basis of summing corresponding scan lines in successive scans, it does not disclose any improvement in the method of the Pusch specification for summing corresponding scan line signals where these signals are output in parallel from the detector array during each scan.

It is an object of the present invention to provide an improved method of summing corresponding scan line signals from successive scans in cases where these signals are output in parallel from the detector array during each scan; in particular, it is an object of the invention to provide a summation method which does not require the spatial reconstruction of the image.

Accordingly, the present invention provides an optical scanning device for producing electrical picture-information signals representative of a scene under surveillance, said device comprising:

— a detector array having N rows of detector elements where N is an integer multiple of P and P is an integer greater than one, each said row comprising at least one detector element each arranged to produce electrical output signals indicative of light incident thereon,

— optical means arranged to cause a monitoring of the whole of said scene by effecting a number of overlapping scans during each of which incident light received from a corresponding band of the surveyed scene is scanned across the detector array, the output signals from said N detectors rows being produced in parallel during each scan with the signals from each detector row representing a respective line of picture information taken from the corresponding band of the surveyed scene, the degree of overlap of successively scanned bands being such that each said line of picture information is represented P times during a said monitoring, and

— signal processing means arranged to receive the said electrical output signals produced by the detector array during a said monitoring and to combine together those signals which represent the same line of picture information,

wherein said signal processing means comprises a plurality of summing means, and N stores each capable of storing signals representing a line of picture information, said detector rows being organised into P groups each of N/P adjacent rows and said stores being similarly organised in P groups each of N/P stores, a first one of said groups of detector rows — being the group which is first subjected to each part of the surveyed scene during a said monitoring — being arranged to pass its output signals in parallel to a first one of said groups of stores and each succeeding group of detector rows being arranged to pass its output signals in parallel to a respective one of the remaining groups of stores via a respective said summing means which is also connected to receive signals in parallel from the group of stores associated with the preceding group of detector rows whereby, during each scan, each summing means sums each of the output signals coming from its associated group of detector rows with previously stored signals relating to the same line of picture information.

Due to this arrangement, during a said monitoring of a scene under surveillance, in the first scan, a given line of the scene will be scanned across one of the detector rows of the first group of detector rows; during the next scan, this line will be scanned across the corresponding row of the next group of detector rows and so on for each of the P groups of detector rows. Hence, during each scan, the information being fed to each group of stores other than the first is identical (except for noise) to the information already present in the preceding group of stores. Therefore, by adding the contents of the previous group of stores to the signals coming from a group of detector rows before storing the signals in the associated group of stores, one obtains a coherent addition of the picture information, and an incoherent addition of noise, resulting in a signal to noise ratio improvement. Thus, for example, a 3 dB improvement in the signal-to-noise ratio can be obtained with a two-fold overlap. With a greater degree of overlap, a greater improvement in the signal-to-noise ratio can be obtained. In general, for a P-fold overlap of the scan bands, the signal-to-noise improvement is of the order of $10 \log P$ dB.

Preferably, the signal processing means includes a further group of N/P stores which is associated with the last group of detector rows (being the group which is last subjected to each part of the surveyed scene during a said monitoring. This last group of detector rows thus has two associated groups of stores. The signals output during each scan from the summing means associated with said last group of detector rows are arranged to be fed alternately to each of the two associated groups of stores whereby to enable the signals held in one of these groups of stores to be converted into a television format while the other group of stores receives the signals output from the summing means.

The said stores are preferably digital stores with each detector row being provided with an associated analogue-to-digital converter. Furthermore, where each detector row comprises two or more detector elements, it is preferably provided with an associated analogue summing circuit to which the outputs of the detector elements of that row are fed, the output of the analogue summing circuit being fed to the associated analogue-to-digital converter.

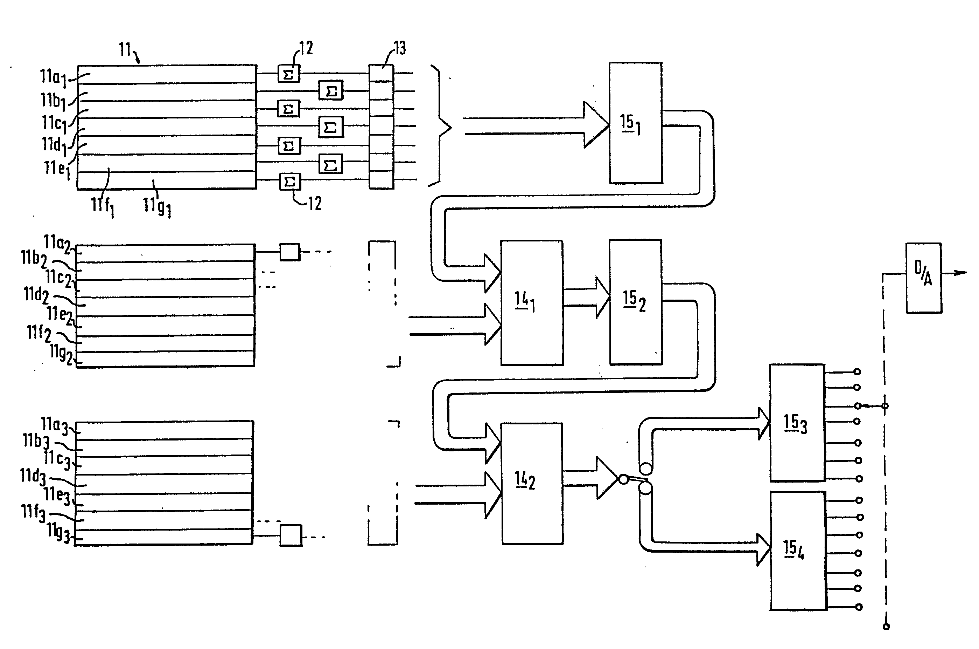

One embodiment of the present invention will now be more particularly described, by way of example, with reference to the accompanying drawing, the single figure of which is a schematic block diagram representing an array of detector elements and the electronic logic circuits connected to it.

Referring now to the drawing, there is shown an array of detector elements, generally indicated 11, which in the drawing is shown as twenty one rows of detector elements. In this embodiment the number of detector rows (N) has been chosen as 21 for simplicity, although it will be appreciated that in practice N might be less than or greater than this. If, for example, the overlap P is chosen as 3 then N/P = 7; P + 1 = 4; and N + N/P = 28. Likewise, each row of detector elements has been represented by a horizontal line rather than indicating each individual detector element; in a practical embodiment the number may vary from one to several hundred detector elements in each row. The associated optical scanning system has not been illustrated since this is not different from known optical scanning systems for this purpose except in the relation between the speed at which the polygonal reflector is rotated and the number of detector elements in the array.

The twenty one rows of detector elements 11 are shown grouped as three separate groups of seven rows, although again this is purely for convenience of the explanation and in practice the rows of the detector array would all be equally spaced.

The outputs from the detector elements 11 are fed to an analogue summing circuit, and the output from the summing circuit 12 is passed to an analogue-to-digital converter 13 which converts the analogue sum to digital form and feeds the digital signal to a processor circuit which controls an array of $P + 1 = 4$ groups each of seven stores 15, the four groups being represented by the subscripts 1—4. The individual stores of each group are capable of holding the picture content of an entire line.

The individual rows of detector elements in the first group of the array 11 are indicated by the subscripts a—g: the rows of detector elements in the second group are indicated by the subscripts $a_2$—$g_2$, the same reference letter indicating corresponding rows; and likewise in the third group the rows are indicated by the subscripts $a_3$—$g_3$.

In operation, each part of the picture is scanned three times, this representing the degree of overlap P.

Considering now a scan subsequent to the first in the production of a picture frame, for example the fourth scan, the detector rows $11a_1$ to $11g_1$ of the first group are scanned with picture information being scanned for the first time whilst the rows $11a_2$—$11g_2$ of the second group are scanned with the picture information which in the third scan was scanned across the first group $11a_1$—$11g_1$. Likewise the third group of detectors $11a_3$—$11g_3$ are scanned with the picture information which in the third scan was scanned across the second group of detectors $11a_2$—$11g_2$. During this fourth scan the output signals from the detector elements of the first group $11a_1$—$11g_1$ are fed to the associated analogue summer circuits 12, and then via the analogue-to-digital converter 13 to the first group of stores $15_1$, the contents of the first group of stores $15_1$ being fed out to a first part of the processor circuit $14_1$ which at this time is receiving signals from the second group of detectors $11a_2$—$11g_2$ which is being scanned with the picture information which in the previous scan was scanned across the first group of detectors $11a_1$—$11g_1$. The contents of the second group of stores $15_2$ are at this time being fed via the second part $14_2$ of the processor 14 to the fourth group of stores $15_4$

in addition to the signals from the third group of rows of detectors $11a_3$—$11g_3$, and the contents of the store $15_3$ are being fed out to be converted into television format. In the next scan the processing is similar, with the exception that the contents of the store group $15_2$ are fed into store group $15_3$ together with signals from the third detector group $11a_3$—$11g_3$, whilst the contents of store group $15_4$ are fed out for conversion.

In the embodiment described above there is a triple overlap although it will be appreciated that much greater degrees of overlap can be employed in practical systems using a greater number of rows of detectors than that illustrated in the drawing. Of course, no signal can be displayed until the set number of overlapping scans has taken place. In the above embodiment, therefore, signals from the first and second scans will be incomplete and therefore are not displayed. In general, for a P-fold overlap, the first P-1 scans will not be displayed as they will not have been scanned the requisite number of times.

## Claims

1. An optical scanning device for producing electrical picture-information signals representative of a scene under surveillance, said device comprising:

— a detector array having N rows (11) of detector elements where N is an integer multiple of P and P is an integer greater than one, each said row (11) comprising at least one detector element each arranged to produce electrical output signals indicative of light incident thereon,

— optical means arranged to cause a monitoring of the whole of said scene by effecting a number of overlapping scans during each of which incident light received from a corresponding band of the surveyed scene is scanned across the detector array, the output signals from said N detector rows (11) being produced in parallel during each scan with the signals from each detector row (11) representing a respective line of picture information taken from the corresponding band of the surveyed scene, the degree of overlap of successively scanned bands being such that each said line of picture information is represented P times during a said monitoring, and

— signal processing means (14, 15) arranged to receive the said electrical output signals produced by the detector array during a said monitoring and to combine together those signals which represent the same line of picture information.

wherein said signal processing means comprises a plurality of summing means (14), and N stores (15) each capable of storing signals representing a line of picture information, said detector rows (11) being organised into P groups ($11a_1$—$11g_1$, $11a_2$—$11g_2$, and $11a_3$—$11g_3$) each of N/P adjacent rows and said stores being similarly organised in P groups

($15_1$, $15_2$, $15_3$) each of N/P stores, a first one of said groups of detector rows — being the group ($11a_1$—$11g_1$) which is first subjected to each part of the surveyed scene during a said monitoring — being arranged to pass its output signals in parallel to a first one of said groups of stores ($15_1$) and each succeeding group of detector rows ($11a_2$—$11g_2$, $11a_3$—$11g_3$) being arranged to pass its output signals in parallel to a respective one of the remaining groups of stores ($15_2$, $15_3$) via a respective said summing means ($14_1$, $14_2$) which is also connected to receive signals in parallel from the group of stores ($15_1$, $15_2$) associated with the preceding group of detector rows whereby, during each scan, each summing means ($14_1$, $14_2$) sums each of the output signals coming from its associated group of detector rows ($11a_1$—$11g_1$, $11a_2$—$11g_2$, $11a_3$—$11g_3$) with previously stored signals relating to the same line of picture information.

2. An optical scanning device according to Claim 1, wherein said signal processing means includes a further group ($15_4$) of N/P stores which is associated with the last group of detector rows (being the group ($11a_3$—$11g_3$) which is last subjected to each part of the surveyed scene during a said monitoring), the signals output during each scan from the summing means ($14_2$) associated with said last group of detector rows ($11a_3$—$11g_3$) being fed alternately to each of the two associated groups of stores ($15_3$, $15_4$) whereby to enable the signals held in one of these groups of stores ($15_3$, $15_4$) to be converted into a television format while the other group of stores ($15_4$, $15_3$) receives the signals output from the summing means ($14_2$).

3. An optical scanning device as claimed in Claim 1 or Claim 2, wherein the said stores (15) are digital stores and each detector row (11) has an associated analogue-to-digital converter (13).

4. An optical scanning device according to Claim 3, wherein each detector row (11) has an associated analogue summing circuit (13) to which the outputs of the said at least one detector element of that row (11) are fed, the output of said analogue summing circuit (13) being fed to said analogue-to-digital converter (12).

5. An optical scanning device according to Claim 3, including a device for converting into a format suitable for television display the signal output from the stores associated with said last said group of detector rows (11).

## Revendications

1. Analyseur optique pour produire des signaux électriques d'informations d'image représentant une scène sous surveillance, comprenant:

— un réseau détecteur comportant N rangées (11) d'éléments détecteurs, où N est un multiple entier de P qui est un entier supérieur à un, chacune desdites rangées (11) comprenant au moins un élément détecteur disposé pour produire des signaux électriques de sortie indicatifs de la lumière incidente sur celui-ci,

— un moyen optique disposé pour réaliser un contrôle de toute la scène en effectuant un certain nombre d'analyses se recouvrant pendant chacune desquelles la lumière incidente reçue d'une bande correspondante de la scène surveillée est analysée à travers le réseau détecteur, les signaux de sortie desdites N rangées de détecteurs étant produits en parallèle pendant chaque analyse, les signaux de chaque rangée de détecteurs représentant une ligne respective d'informations d'image prises à partir de la bande correspondante de la scène surveillée, le degré de recouvrement des bandes successives analysées étant tel que chacune de ces lignes d'informations d'image est représentée P fois pendant ledit contrôle, et

— un moyen de traitement de signaux (14, 15) disposé pour recevoir lesdits signaux électriques de sortie produits par le réseau détecteur pendant ledit contrôle et pour combiner entre eux les signaux qui représentent la même ligne d'informations d'image,

caractérisé en ce que ledit moyen de traitement de signaux comprend un ensemble de moyens d'addition (14), et N mémoires (15) propres à mémoriser chacune des signaux représentant une ligne d'informations d'image, lesdites rangées de détecteurs (11) étant organisées en P groupes ($11a1$—$11g1$, $11a2$—$11g2$, et $11a3$—$11g3$) comportant chacun N/P rangées voisines et lesdites mémoires étant pareillement organisées en P groupes ($15_1$, $15_2$, $15_3$) comportant chacun N/P mémoires, un premier groupe desdits groupes de rangées de détecteurs, qui est le groupe ($11a1$—$11g1$) soumis en premier à chaque partie de la scène surveillée pendant ledit contrôle, étant disposé pour transmettre ses signaux de sortie en parallèle à un premier groupe desdits groupes de mémoires ($15_1$) et chaque groupe de rangées de détecteurs ($11a2$—$11g2$, $11a3$—$11g3$) qui suit étant disposé pour transmettre ses signaux de sortie en parallèle à un groupe respectif des autres groupes de mémoires ($15_2$, $15_3$) par l'intermédiaire d'un moyen respectif desdits moyens d'addition ($14_1$, $14_2$) qui est aussi connecté pour recevoir des signaux en parallèle du groupe de mémoires ($15_1$, $15_2$) associé au groupe précédent de rangées de détecteurs pour que, pendant chaque analyse, chaque moyen d'addition ($14_1$, $14_2$) additionne chacun des signaux de sortie provenant de son groupe associé de rangées de détecteurs ($11a1$—$11g1$, $12a2$—$11g2$, $11a3$—$11g3$) avec les signaux précédemment mémorisés correspondant à la même ligne d'informations d'image.

2. Analyseur optique selon la revendication 1, caractérisé en ce que ledit moyen de traitement de signaux comprend un autre groupe

(15$_4$) de N/P mémoires qui est associé au dernier groupe de rangées de détecteurs, qui est le groupe (11a3—11g3) soumis en dernier à chaque partie de la scène surveillée pendant ledit contrôle, les signaux extraits du moyen d'addition (14$_2$) associé audit dernier groupe de rangées de détecteurs (11a3—11g3) pendant chaque analyse étant envoyés alternativement à chacun des deux groupes associés de mémoires (15$_3$, 15$_4$), ce qui permet de convertir les signaux conservés dans un de ces groupes de mémoires (15$_3$, 15$_4$) en un format de télévision tandis que l'autre groupe de mémoires (15$_4$, 15$_3$) reçoit les signaux de sortie du moyen d'addition (14$_2$).

3. Analyseur optique selon l'une quelconque des revendications 1 et 2, caractérisé en ce que lesdites mémoires (15) sont des mémoires numériques et en ce que chaque rangée de détecteurs (11) comporte un convertisseur analogique-numérique (13) associé.

4. Analyseur optique selon la revendication 3, caractérisé en ce que chaque rangée de détecteurs (11) comporte un circuit d'addition analogique (13) associé auquel sont envoyés les signaux de sortie dudit élément détecteur au moins de la rangée (11), le signal de sortie dudit circuit d'addition analogique (13) étant envoyé au convertisseur analogique-numérique (12).

5. Analyseur optique selon la revendication 3, caractérisé en ce qu'il comprend un dispositif pour convertir en un format approprié pour une visualisation de télévision le signal de sortie des mémoires associées audit dernier groupe de rangées de détecteurs (11).

**Patentansprüche**

1. Optische Abtasteinrichtung zum Erzeugen elektrischer Bildinformationssignale, die einer überwachten Szene entsprechen, mit

einer Detektoranordnung mit N Reihen (11) von Detektorelementen, wobei N ein ganzzahliges Vielfaches von P und P eine ganze Zahl grösser als 1 ist, jede Reihe (11) mindestens ein Detektorelement enthält und jedes Detektorelement das Auftreffen von Licht auf das Element anzeigende elektrische Ausgangssignale erzeugt,

optischen Mitteln, die dafür sorgen, daß ein Überwachung der gesamten Szene durch eine Anzahl überlappender Abtastungen erfolgt, während welcher jeweils von einem entsprechenden Band der überwachten Szene auftreffendes Licht über die Detektoranordnung abgetastet wird, wobei die Ausgangssignale der N Detektorreihen (11) parallel während jeder Abtastung erzeugt werden, die Ausgangssignale jeder Detektorreihe (11) eine entsprechende Zeile der Bildinformation vom entsprechenden Band der überwachten Szene repräsentieren und der Überlappungsgrad aufeinanderfolgend abgetasteter Bänder derart ist, daß jede der Zeilen der Bildinformation P-mal während eines der Überwachungsvorgänge repräsentiert wird, und

einer Signalverarbeitungseinrichtung (14, 15), welche die von der Detektoranordnung während eines der Überwachungsvorgänge erzeugten elektrischen Ausgangssignale empfängt und diejenigen Signale zusammenfasst, welche dieselbe Zeile der Bildinformation repräsentieren, wobei die Signalverarbeitungseinrichtung eine Mehrzahl von Summiergliedern (14) und N Speicher (15), die jeweils zum Speichern von eine Zeile der Bildinformation repräsentierenden Signalen fähig sind, aufweist, die Detektorreihen (11) in P Gruppen (11a$_1$—11g$_1$, 11a$_2$—11g$_2$ und 11a$_3$—11g$_3$) von jeweils N/P benachbarten Reihen organisiert sind, die Speicher ähnlich in P Gruppen (15$_1$, 15$_2$, 15$_3$) von jeweils N/P Speichern organisiert sind, eine erste der Gruppen von Detektorreihen — und zwar die gruppe (11a$_1$—11g$_1$), welche zuerst jedem Teil der überwachten Szene während des Überwachungsvorgangs unterworfen ist — ihre Ausgangssignale parallel einer ersten der Gruppen von Speichern (15$_1$) zuführt und jede nachfolgende Gruppe von Detektorreihen (11a$_2$—11g$_2$, 11a$_3$—11g$_3$) ihre Ausgangssignale parallel je einer der übrigen Gruppen von Speichern (15$_2$, 15$_3$) über ein entsprechendes der Summierglieder (14$_1$, 14$_2$) zuführt, das auch zum parallelen Empfang von Signalen von der der vorhergehenden gruppe von Detektorreihen zugeordneten Gruppe von Speichern (15$_1$, 15$_2$) geschaltet ist, wodurch während jeder Abtastung jedes Summierglied (14$_1$, 14$_2$) jedes der Ausgangssignale, die von seiner zugehörigen Gruppe von Detektorreihen (11a$_1$—11g$_1$, 11a$_2$—11g$_2$, 11a$_3$—11g$_3$) kommen, mit zuvor gespeicherten Signalen summiert, die sich auf dieselbe Zeile der Bildinformation beziehen.

2. Optische Abtasteinrichtung nach Anspruch 1, in welcher die Signalverarbeitungseinrichtung eine weitere Gruppe (15$_4$) von N/P Speichern enthält, die der letzten Gruppe von Detektorreihen zugeordnet ist (bei der es sich um die Gruppe (11a$_3$—11g$_3$) handelt, welche zuletzt jedem Teil der überwachten Szene während eines der Überwachungsvorgänge unterworfen ist), und die Ausgangssignale des dieser letzten Gruppe von Detektorreihen (11a$_3$—11g$_3$) zugeordneten Summiergliedes (14$_2$) während jeder Abtastung abwechselnd jeder der beiden zugeordneten Gruppen von Speichern (15$_3$, 15$_4$) zugeführt werden, wodurch die Umwandlung der in der einen dieser Gruppen von Speichern (15$_3$, 15$_4$) enthaltenen Signale in ein Fernsehformat ermöglicht wird, während die andere Gruppe von Speichern (15$_4$, 15$_3$) die Ausgangssignale von dem Summierglied (14$_2$) empfängt.

3. Optische Abtasteinrichtung nach Anspruch 1 oder Anspruch 2, in welcher die Speicher (15) Digitalspeicher sind und jeder Detektorreihe (11) ein Analog-Digital-Umsetzer (13) zugeordnet ist.

4. Optische Abtasteinrichtung nach Anspruch 3, in welcher jeder Detektorreihe (11) eine analoge Summierschaltung (13) zugeordnet ist, welcher, die Ausgangssignale des mindestens einen Detektorelements der betreffenden Reihe (11) zugeführt sind, und die Ausgangssignale der analogen Summierschaltung (13) dem Analog-Digital-Umsetzer (12) zugeführt sind.

5. Optische Abtasteinrichtung nach Anspruch 3, die eine Einrichtung zum Umwandeln des Ausgangssignals von den der erwähnten letzten Gruppe von Detektorreihen (11) zugeordneten Speichern in ein für die Fernsehwiedergabe geeignetes Format enthält.